Europäisches Patentamt

European Patent Office

Office européen des brevets

(19)

(11) Veröffentlichungsnummer: **0 204 201**

**A2**

(12) # EUROPÄISCHE PATENTANMELDUNG

(21) Anmeldenummer: **86106756.9**

(22) Anmeldetag: **17.05.86**

(51) Int. Cl.⁴: **G11B 15/32**

(30) Priorität: **01.06.85 DE 3519699**

(43) Veröffentlichungstag der Anmeldung:
**10.12.86 Patentblatt 86/50**

(84) Benannte Vertragsstaaten:
**CH DE FR GB IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Geuder, Winfried**
**Im Grund 19**
**D-8510 Fürth(DE)**

(54) **Kupplungseinrichtung für ein Video-Magnetbandgerät.**

(57) Es wird eine Kupplungseinrichtung für ein Video-Magnetbandgerät mit einem Aufwickelteller (1) und einem Abwickelteller (1) für ein Magnetband beschrieben, bei der die Wickelteller aus einer Antriebsscheibe (2) und einer Bremsscheibe (3) bestehen. Beide Scheiben sind über ein einfaches Kupplungsteil derart gekoppelt, daß die Antriebsscheibe (2) gegenüber der Bremsscheibe (3) in einer Drehrichtung freiläuft, während in der anderen Drehrichtung beide Scheiben reibschlüssig verbunden sind.

FIG.1

EP 0 204 201 A2

## KUPPLUNGSEINRICHTUNG FÜR EIN VIDEO-MAGNETBANDGERÄT

Die Erfindung bezieht sich auf eine Kupplungseinrichtung für ein Video-Magnetbandgerät gemäß dem Oberbegriff des Patentanspruchs 1. Für Video-Magnetbandgeräte ist es besonders wichtig, daß das Magnetband in allen möglichen Gerätefunktionen, z.B. auch während eines Störfalls schonend behandelt wird. Selbst der Ausfall einer Wickel-Antriebsseite oder einer Bremseinrichtung für einen Wickelteller, insbesondere während des schnellen Bandvor-bzw. Bandrücklaufs, darf keine erhöhte Bandbelastung auslösen. Um dies zu vermeiden, ist mindestens in einem Bandwickelteller eine Art Überholkupplung vorgesehen, die nur in einer bestimmten Drehrichtung des Wickel tellerantriebes eine Freilaufeigenschaft zeigt, und in der Rückdrehrichtung eine reibungsschlüssige Mitnahme des Wickeltellers bewirkt. Derartige drehrichtungsabhängige Kupplungseinrichtungen sind meist aufwendig an Teilen ausgeführt, oder die freilaufende Drehrichtungsseite arbeitet nicht ausreichend verlustfrei. Aufgabe der Erfindung ist es daher, eine Kupplungseinrichtung für die Bandwickelteller in einem Video-Magnetbandgerät zu schaffen, die den beiden Bandwickeltellern in einer bestimmten Drehrichtung einen möglichst verlustfreien Freilauf gegenüber einer Bremseinrichtung ermöglicht, während sie in der anderen Drehrichtung ein bestimmtes Mitnahmemoment übertragen soll und die Kupplungseinrichtung selbst einen äußerst einfachen mechanischen Aufbau aufweist.

Diese Aufgabe wird erfindungsgemäß durch die im Kennzeichen des Patentanspruchs 1 angegebenen Merkmale gelöst.

Die Erfindung wird nachfolgend anhand der Zeichnungen näher erläutert.

Fig. 1 ist eine schematische Teildarstellung eines Bandwickeltellers für ein Video-Magnetbandgerät und dessen Antriebsmöglichkeit in einer Seitenansicht,

Fig. 2 ist eine perspektivische Ansicht eines Wickeltellers mit einer abgezogenen Antriebsscheibe, und

Fig. 3 ist eine vergrößerte Draufsicht auf einer im Schnitt III -III dargestellten Bremsscheibe nach der Figur 1.

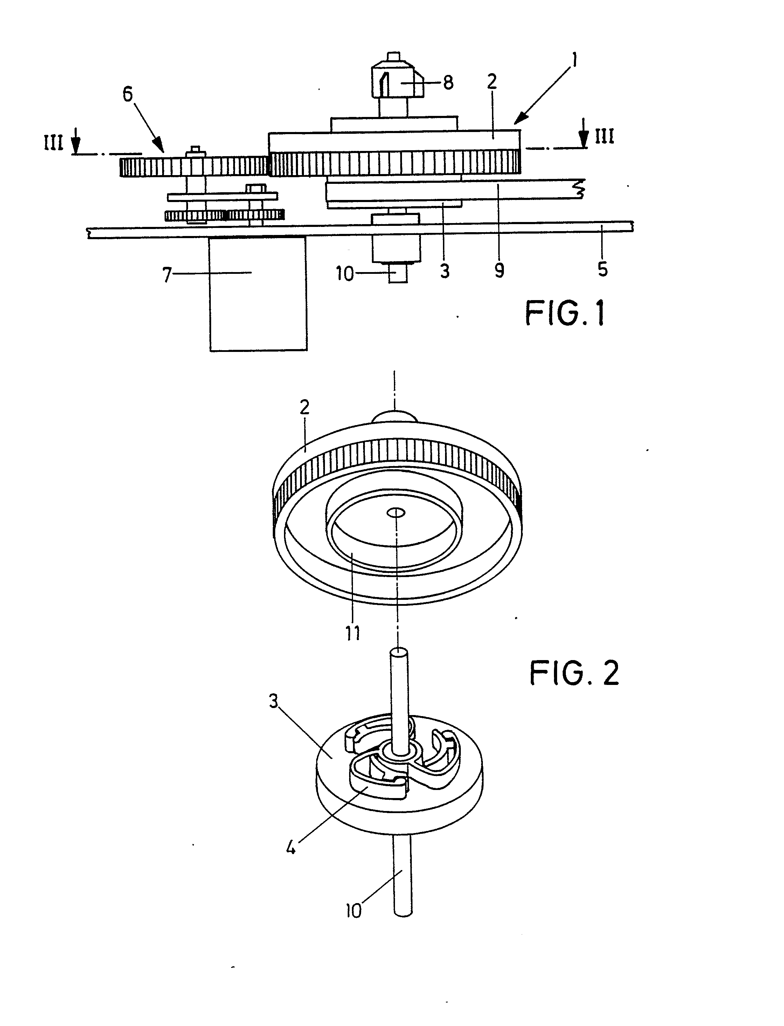

Die Figur 1 zeigt einen Wickelteller 1 eines nicht näher dargestellten Video-Magnetbandgerätes. Der Wickelteller besteht aus einer Antriebsscheibe 2 und einer Bremsscheibe 3. Beide Teile sind über ein Kupplungsteil reibungsschlüssig miteinander gekoppelt. Der Wickelteller ist auf einem nur andeutungsweise gezeichneten Gerätechassis 5 gelagert und wird über ein beispielsweise als Schwenkgetriebe 6 dargestelltes Getriebe mit Motor 7 angetrieben. Die in einer nicht gezeichneten Kassette befindliche Bandwickelspule wird durch einen mit dem Antriebsteller verbundenen Wickeldorn 8 angetrieben. Auf die Bremsscheibe 3 wirkt eine nicht weiter dargestellte Bremskraft in Form einer Bandbremse 9 ein. Die Bandbremse 9 wird in bekannter Weise, z. B. über einen im Bandlauf befindlichen Fühlhebel, bandzugsabhängig gesteuert.

Die Figur 2 zeigt das die Antriebsscheibe 2 und die Bremsscheibe 3 drehrichtungsabhängig und reibungsschlüssig verbindende Kupplungsteil 4. Zur Verdeutlichung des Kupplungsteils, das in der Bremsscheibe 3 eingesetzt ist, ist in der Zeichnung die Antriebsscheibe noch vor dem Aufsetzen auf die Bremsscheibe dargestellt. Im montierten Zustand ist die Antriebsscheibe 2 und die Bremsscheibe 3 auf eine Achse 10 aufgesteckt, wobei eine ringförmige Flanschwand 11, die an der Innenseite der Antriebsscheibe angeformt ist, über das Kupplungsteil 4 übergreift.

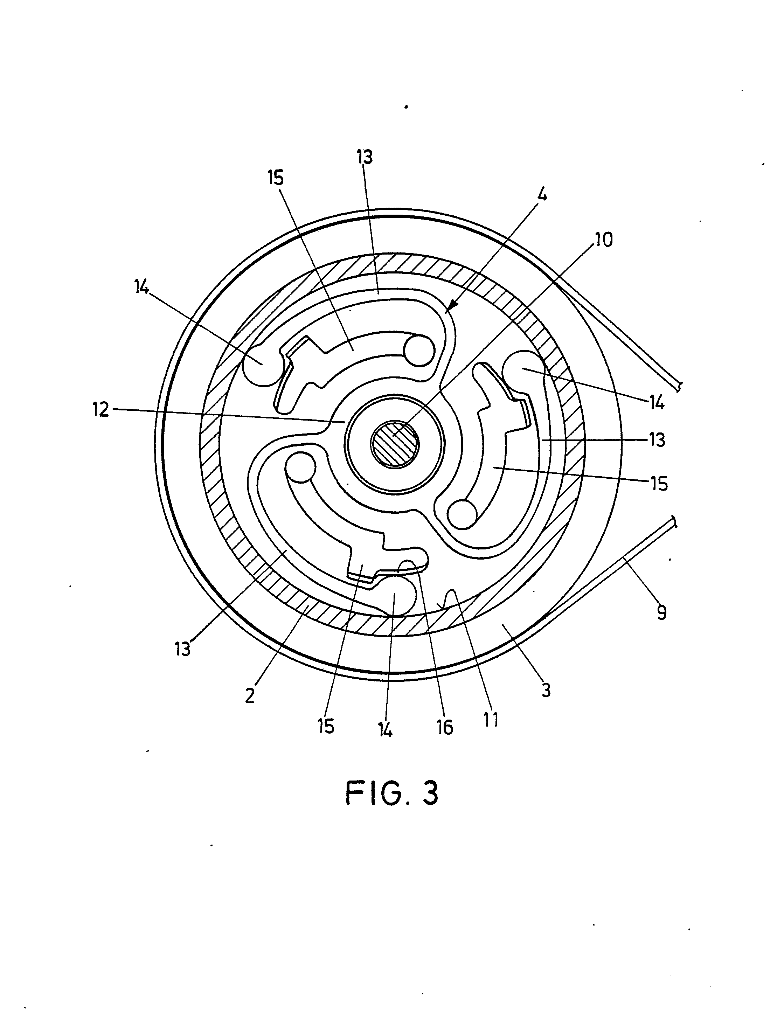

Aus der Figur 3 ist die Lage des Kupplungsteils 4, das die Antriebsscheibe 2 mit der Bremsscheibe 3 koppelt, in einer Schnittzeichnung dargestellt. Das Kupplungsteil 4 besteht aus einem Ring 12 und vorzugsweise drei einstückig mit dem Ring verbundenen Federarmen 13, die sichelförmig ausgeführt sind. Das Teil ist einstückig aus Weichplastik gespritzt. Die Federarme weisen am Ende zylinderförmige Verdickungen 14 auf. Die Verdickungen 14 liegen einerseits an der Flanschwand 11 der Antriebsscheibe 2 an und andererseits an den Flanschsegmenten 15 der Bremsscheibe 3. In den Anlagebereichen 16, in denen die zylinderförmigen Verdickungen 14 des Kupplungsteils 4 an den Flanschsegmenten der Bremsscheibe 3 anliegen, weisen die Flanschsegmente eine zunehmende Verstärkung auf, so daß der Abstand zwischen der Flanschwand 11 und den Anlagebereichen 16 der Bremsscheibe 3 zunehmend kleiner wird. Hierdurch tritt bei einer bestimmten Drehrichtung der Antriebsscheibe 2 gegenüber der Bremsscheibe 3 eine Kopplung beider Scheiben 2 und 3 unter einem bestimmten Mitnahmemoment ein. Bei entgegengesetzter Drehrichtung löst sich die Verkoppelung, und die beiden Scheiben sind ohne Reibschluß gegeneinander frei drehbar. Die Federarme 13 des Kupplungsteils 4 weisen nur ganz geringe Federkräfte auf. Durch die entsprechende Auswahl der Länge der Flanschsegmente ist eine gewünschte Drehwinkelbegrenzung der beiden Scheiben 2 und 3 zueinander möglich.

## Ansprüche

1. Kupplungseinrichtung für ein Video-Magnetbandgerät mit einem Aufwickelteller und einem Abwickelteller für ein Magnetband, wobei die Wickelteller mit einer Bremseinrichtung, vorzugsweise einer Band-Bremseinrichtung versehen sind, **dadurch gekennzeichnet ,** daß der Wickelteller - (1) aus einer Antriebsscheibe (2) und einer Bremsscheibe (3) besteht, daß beide Scheiben (2, 3) miteinander gekoppelt sind, daß ein einstückig aus Weichplastik gespritzter Ring (12) mit vorzugsweise drei Federarmen (13) als Kupplungsteil (4) dient, und daß das Kupplungsteil die Antriebsscheibe (1) in einer Drehrichtung freigibt, während es in der anderen Drehrichtung ein bestimmtes Mitnahmemoment zwischen Bremsscheibe (3) und Antriebsscheibe (2) ausübt.

2. Kupplungseinrichtung nach Anspruch 1, **dadurch gekennzeichnet ,** daß die Federarme - (13) des Kupplungsteils (4) am Ende zylinderförmige Verdickungen (14) aufweisen, daß die Verdickungen einerseits an einer Flanschwand - (11) in der Antriebsscheibe (2) und andererseits an Flanschsegmente (15) in der Bremsscheibe (3) anliegen.

3. Kupplungseinrichtung nach den Ansprüchen 1 und 2, **dadurch gekennzeichnet,** daß die Flanschsegmente (15) im Anlagebereich (16) zu den zylindrischen Verdickungen des Kupplungsteils eine Anlaufschräge aufweisen.

FIG.1

FIG. 2

FIG. 3